# EUROPEAN PATENT SPECIFICATION

(11) **EP 4 095 589 B1**
(45) Date of publication and mention of the grant of the patent: **12.03.2025**
(21) Application number: 22173833.9
(22) Date of filing: 17.05.2022
(51) Int. Cl.: G02B 30/40, G02B 30/56, H04N 13/346, G06F 3/042, G02B 30/60, H04N 13/388

(54) **DISPLAY DEVICE**
ANZEIGEVORRICHTUNG
DISPOSITIF D'AFFICHAGE

(30) Priority: 24.05.2021 JP 2021086656
(43) Date of publication of application: 30.11.2022
(73) Proprietor: Alps Alpine Co., Ltd., Ota-ku, Tokyo 145-8501 (JP)
(72) Inventor: Ashimine, Katsunari, Iwaki, Fukushima (JP); Sato, Hiroki, Sendai, Miyagi (JP)
(74) Representative: Schmitt-Nilson Schraud Waibel Wohlfrom Patentanwälte Partnerschaft mbB

(56) References cited:
- EP-B1- 0 778 440
- WO-A1-2018/078777
- WO-A1-2019/039600

## Description

The present invention relates to a display device that displays an image in air using retroreflection.

JP 2013-517528 A discloses a stereoscopic display that enables stereoscopic vision by imparting a lens structure or a prism structure as a configuration for obtaining stereoscopic effect on a display.

EP 0 778 440 B1 discloses a backlight illuminated colour display device comprising a light guiding member constructed with a pair of wedge-shaped light guiding plates bonded together, light sources of different colors, each disposed facing one edge of each of said wedge-shaped light guiding plates, substantially transparent layers, each formed on a light emergence surface of each of said wedge-shaped light guiding plates and having a higher refractive index than said light guiding member, and a light scattering layer formed in a desired pattern on each of said transparent layers.

Further, aerial imaging by retro-reflection (AIRR) using retroreflection is known. WO 2019/039600 A1 discloses an aerial image display device provided with at least one light source, and an optical system for forming a real image of the light source, wherein the optical system comprises a half mirror disposed on the front surface side, and a retroreflection member disposed opposite the half mirror and disposed on the back surface side, and forms the real image outside the half mirror.

WO 2018/078777 A1 discloses an aerial image display system with an image display device provided with image display equipment for displaying an image on a screen on the basis of an acquired image signal, an image forming member which forms a real image in the air from image light including the image displayed on the screen, a wavelength-selective reflecting member which has properties to transmit visible light and reflect invisible light, and which is disposed on the same side of the image forming member as the surface thereof onto which the image light is incident, and an image capturing device which receives invisible light reflected from an object to be detected that is performing an input operation with respect to the real image, and captures an invisible light image of the object to be detected.

For example, in order to enable observation of an image formed in the air from a wider angle, the display device of JP 2017-107165 A uses two retroreflective members, and one of the retroreflective members is arranged on the emission axis of the light source. In the image display device of JP 2018-81138 A, in order to facilitate adjustment of an image forming position of an image, a half mirror, a retroreflective member, and an image output device are disposed in parallel and a position of the half mirror or the image output device is changed so that the image forming position can be adjusted. In the image display device of JP 2019-66833 A, in order to minimize a decrease in visibility of an image, the number of times of light transmission through a phase difference member (λ/4 plate) is reduced and it is made difficult for dust or the like to enter between a retroreflective member and the phase difference member. In the aerial image display device of JP 2019-101055 A, in order to reduce a thickness of a device, a display and a retroreflective member are disposed parallel to a beam splitter and a deflection optical element is disposed on the display.

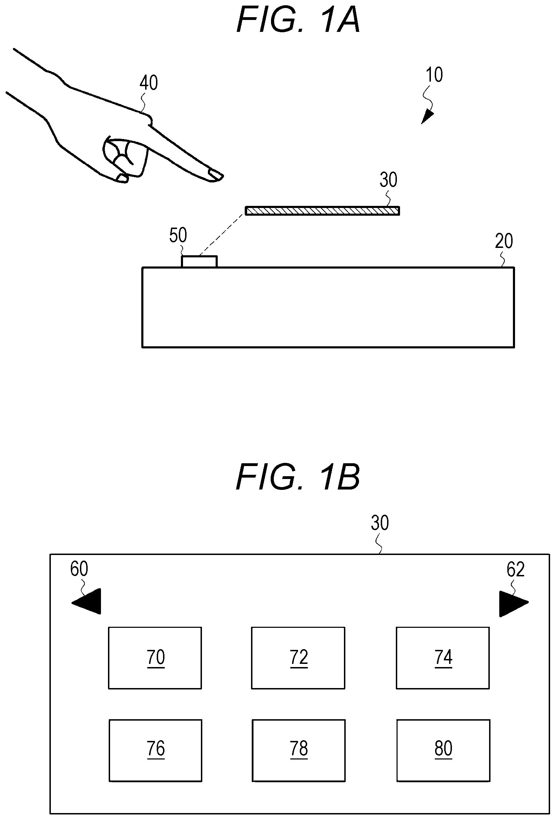

Fig. 1A illustrates an example in which a display device that displays an aerial image is applied to a spatial input device. The spatial input device 10 includes a housing (structure) 20 that accommodates a display device that generates an aerial image, and a three-dimensional distance sensor 50 that detects approach of an object (for example, a user's finger or the like) 40 to the aerial image 30 generated above the housing 20. The aerial image 30 includes, for example, left and right scroll keys 60 and 62 and icon images 70 to 80 for instructing input as illustrated in Fig. 1B.

In a case where only the aerial image 30 is displayed, a situation often occurs in which, when the user sees the aerial image 30, the user recognizes that the aerial image 30 is displayed on the structure 20 on a back surface, and does not recognize it as the aerial image 30 in the first place. This is related to a human cognitive process, and is caused by superimposing the aerial image 30 on a background object in the brain when viewing the aerial image. When the aerial image 30 is used as a non-contact device, it is necessary to make the user visually recognize the fact, and how to make the aerial image stand out and easily recognized is a problem in implementation.

An object of the present invention is to provide a display device capable of displaying an aerial image that is easily visually recognized, and a spatial input device using the display device.

The invention relates to a display device according to the appended claims. Embodiments are disclosed in the dependent claims.

A display device according to an aspect of the present invention is capable of displaying an aerial image using retroreflection, the display device including a first optical structure that forms a multiple image by light diffused or scattered by a first light diffusion surface of a first light guide layer, and a second optical structure that retroreflects light diffused or scattered by a second light diffusion surface of a second light guide layer to form an aerial image, in which the first optical structure and the second optical structure are in a stacked relationship, and the first light diffusion surface and the second light diffusion surface are disposed at positions not overlapping each other.

In one embodiment, the first optical structure includes reflection members formed on an upper surface side and a bottom surface side of the first light guide layer, and light incident from a side portion of the first light guide layer is diffused or scattered by the first light diffusion surface formed on a bottom surface or a bottom portion of the first light guide layer. In one embodiment, the second optical structure includes a retroreflective layer formed on a bottom surface side of the second light guide layer, and light incident from a side portion of the second light guide layer is diffused or scattered by the second light diffusion surface formed on a bottom surface or a bottom portion of the second light guide layer. In one embodiment, the second optical structure is stacked on the first optical structure, the first optical structure includes a reflection layer, a first light guide layer formed on the reflection layer, and a beam splitter formed on the first light guide layer, and the second optical structure includes a retroreflective layer, a second light guide layer formed on the retroreflective layer, and a beam splitter formed on the second light guide layer, and a multiple image formed by the first light diffusion surface of the first light guide layer and an aerial image formed by the second light diffusion surface of the second light guide layer can be simultaneously observed from above the second optical structure. In one embodiment, the first optical structure is stacked on the second optical structure, the second optical structure includes a retroreflective layer and a second light guide layer formed on the retroreflective layer, and the first optical structure includes a reflection layer, a first light guide layer formed on the reflection layer, and a beam splitter formed on the first light guide layer, and a multiple image formed by the first light diffusion surface of the first light guide layer and an aerial image formed by the second light diffusion surface of the second light guide layer can be simultaneously observed from above the first optical structure. In one embodiment, a color of light incident on the first light guide layer is different from a color of light incident on the second light guide layer. In one embodiment, the second optical structure further includes a λ/4 plate between a second light guide layer and the retroreflective layer, and a beam splitter formed on an upper surface of the second light guide layer is a polarization beam splitter.

A spatial input device according to another aspect of the present invention includes a display device as described herein, and a detection unit that detects an approach of an object to an aerial video displayed by the display device.

According to aspects of the present invention, since the aerial image and the multiple image are simultaneously formed, a sense of depth or a stereoscopic effect is imparted to the aerial image by the multiple image, and the aerial image is made conspicuous, by which visual attraction of the aerial image is enhanced, and the aerial image is easily recognized.

Figs. 1A and 1B are views illustrating a configuration example in which a conventional display device that displays an aerial image is applied to a spatial input device.
Fig. 2A is a schematic cross-sectional view of a display device according to a first embodiment of the present invention, and Fig. 2B is a perspective view schematically illustrating designs generated by light diffusion surfaces.
Fig. 3 is a diagram illustrating an effect of the display device according to the first embodiment of the present invention.
Fig. 4 is a schematic cross-sectional view illustrating a modification example of a second optical device according to the first embodiment of the present invention.
Fig. 5A is a schematic cross-sectional view of a display device according to a second embodiment of the present invention, and Fig. 5B is a perspective view schematically illustrating designs generated by light diffusion surfaces.

Embodiments of the present invention will be described below. A display device of embodiments of the present invention displays a video using retroreflection in a three-dimensional space without wearing special glasses or the like. In an embodiment, the display device of the present invention is applied to a user input interface using a video displayed in the air. It should be noted that the drawings referred to in the following description of embodiments include exaggerated display in order to facilitate understanding of the invention, and do not directly represent the shape and scale of an actual product.

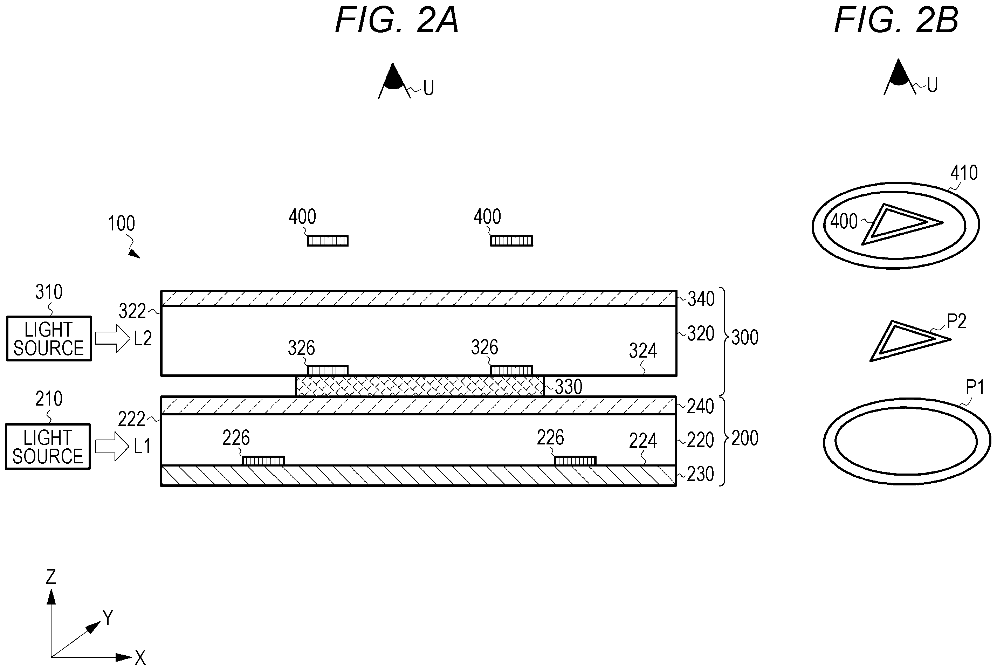

An embodiment of the present invention will be described in detail below. Fig. 2A is a schematic cross-sectional view of a display device that displays an aerial image according to the first embodiment of the present invention, and Fig. 2B is a perspective view schematically illustrating designs of light diffusion surfaces formed in light guide layers.

In the display device of the present embodiment, two light guide layers are stacked, an aerial image is formed by a light diffusion surface of one of the light guide layers, and a multiple image with a sense of depth is formed around or outside the aerial image by a light diffusion surface of the other light guide layer, thereby making the aerial image conspicuous, enhancing visual attraction, and facilitating visual recognition of the aerial image.

As illustrated in the drawing, the display device 100 includes a first optical structure 200 and a second optical structure 300 disposed above the first optical structure 200. The first optical structure 200 includes a light source 210, a light guide layer 220, a reflection layer 230 disposed below the light guide layer 220, and a half mirror 240 disposed above the light guide layer 220.

The light source 210 emits light L1 having a constant emission angle (or radiation angle) in the X direction. The emitted light L1 enters the inside from a side portion 222 of the transparent light guide layer 220, and uniformly irradiates the inside of the light guide layer 220. The light source 210 is not particularly limited, but for example, a light emitting diode, a laser diode, or the like is used. The color (wavelength) of the light L1 emitted from the light source 210 is not particularly limited, but may be the same as or different from the color of the light L2 emitted from the second light source 310, for example. Further, in a case where the side portion 222 of the light guide layer 220 has a certain length in the Y direction, a plurality of the light sources 210 may be arranged along the Y direction of the side portion 222 of the light guide layer 220. Furthermore, although the light L1 is incident from one side portion of the light guide layer 220, the light may be incident from both side portions.

The light guide layer 220 is a transparent plate-like or film-like optical member including a flat upper surface, a flat lower surface, and side surfaces connecting the upper surface and the lower surface. As the light guide layer 220, a known one can be used, and is made of, for example, glass, acrylic plastic, polycarbonate resin, cycloolefin-based resin, or the like. The light guide layer 220 has a constant thickness in the Z direction in order to allow the light L1 from the light source 210 to enter from the side portion 222.

A light diffusion surface 226 for diffusion the incident light L1 in the Z direction is formed on a bottom portion or a bottom surface 224 of the light guide layer 220. The light diffusion surface 226 is formed, for example, by performing laser processing or printing processing on the bottom surface 224 of the light guide layer 220. The light diffusion surface 226 generates a design (original image) for forming a multiple image around or outside the aerial image, and the design is arbitrarily determined in relation to the aerial image. In the example of the drawings, the light diffusion surface 226 is processed to produce a ring-shaped or annular design P1.

The reflection layer 230 is disposed so as to be in contact with the bottom surface 224 of the light guide layer 220. The reflection layer 230 is, for example, a plate-shaped, film-shaped, or thin-film-shaped member having the same shape as the bottom surface 224 of the light guide layer 220, and the material thereof is not particularly limited. The reflection layer 230 totally reflects the light L1 incident on the light guide layer 220.

The half mirror 240 is disposed so as to be in contact with the upper surface of the light guide layer 220. The half mirror 240 is, for example, a transparent optical member having the same shape as the upper surface of the light guide layer 220 and separating incident light into reflected light and transmitted light. The half mirror 240 is configured by, for example, forming a dielectric multilayer film, an anti-reflection film, or the like on a front surface or a back surface of a substrate such as flat glass or plastic. Here, the half mirror 240 in which an amount of reflected light and an amount of transmitted light are equal to each other is exemplified, but a beam splitter in which a ratio between the amount of reflected light and the amount of transmitted light is different in accordance with the luminance of the light source 210 or the luminance of the aerial image may be used.

The light L1 incident from the side portion 222 of the light guide layer 220 travels in the X direction, is diffused or scattered in the Z direction by the light diffusion surface 226, and the light diffused or scattered by the light diffusion surface 226 repeats multiple reflection between the reflection layer 230 and the half mirror 240. When the user observes from a viewpoint U in the Z direction, a multiple virtual image of the design P1 is generated on the back surface of the first optical structure 200 due to the effect of facing mirrors.

The second optical structure 300 includes a light source 310, a light guide layer 320, a retroreflective layer 330 disposed below the light guide layer 320, and a half mirror 340 disposed above the light guide layer 320.

The light source 310 emits light L2 having a constant emission angle (or radiation angle) in the X direction. The emitted light L2 enters the inside from the side portion 322 of the transparent light guide layer 320, and uniformly irradiates the inside of the light guide layer 320. The light source 310 includes, similarly to the light source 210, one or a plurality of light emitting diodes or laser diodes, for example. Note that in a case where the light L2 of the light source 310 and the light L1 of the light source 210 have the same color, light emitted from a single light source may be divided into two by a beam splitter or the like, and the divided light may be emitted to the light guide layers 220 and 320, respectively.

The light guide layer 320 is a transparent plate-like or film-like optical member including a flat upper surface, a flat lower surface, and side surfaces connecting the upper surface and the lower surface, and is formed of a member similar to the light guide layer 220. The light guide layer 320 has a constant thickness in the Z direction in order to allow the light L2 of the light source 310 to enter from the side portion 322.

A light diffusion surface 326 for diffusing the incident light in the Z direction is formed on the bottom portion or a bottom surface 324 of the light guide layer 320. The light diffusion surface 326 is formed, for example, by performing laser processing or printing processing on the bottom surface 324 of the light guide layer 320. The light diffusion surface 326 generates a design (original image) for forming an aerial image, and the design is arbitrarily determined. In the example of the figure, the light diffusion surface 326 is located inside or on an inner periphery of the light diffusion surface 226, and is processed so as to generate a triangular design P2 in which an opening is formed at the center.

The retroreflective layer 330 is formed so as to be in contact with the bottom surface of the light guide layer 320. The retroreflective layer 330 is an optical member that reflects light in the same direction as the incident light, and is not particularly limited in its configuration but includes, for example, prismatic retroreflective elements such as triangular pyramid retroreflective elements and full cube corner retroreflective elements, or bead retroreflective elements. The retroreflective layer 330 is disposed at a position not interfering with the light diffusion surface 226, that is, at a position inside the light diffusion surface 226, and is disposed so as to substantially overlap the light diffusion surface 326 (here, since the design P2 has an opening at the center, the opening is shielded).

The half mirror 340 is disposed so as to be in contact with the upper surface of the light guide layer 320. The half mirror 340 has, for example, the same shape as the upper surface of the light guide layer 320, and is configured similarly to the half mirror 240. Here, the half mirror 340 in which the amount of reflected light and the amount of transmitted light are equal to each other is exemplified, but a beam splitter in which a ratio between the amount of reflected light and the amount of transmitted light is different in accordance with the luminance of the light source 310 or the luminance of the aerial image may be used.

The light L2 incident from the side portion 322 of the light guide layer 320 travels in the X direction and is diffused or scattered in the X direction by the light diffusion surface 326, a part of the diffused or scattered light is reflected by the half mirror 340, and the reflected light is incident on the retroreflective layer 330. The light incident on the retroreflective layer 330 is reflected in the same direction as the incident light, and a part thereof is transmitted through the half mirror 340 and forms an image again. An aerial image 400 of the design P2 floating up from the second optical structure 300 is observed from the viewpoint U of the user in the Z direction. Further, simultaneously with the aerial image 400, a multiple image 410 of the design P1 generated on the outer periphery of the aerial image 400 is also observed.

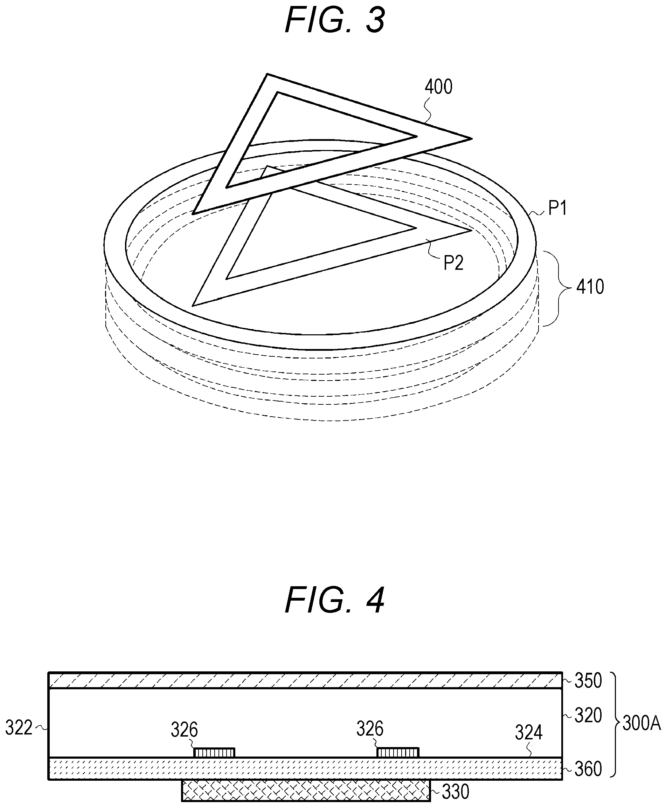

Fig. 3 is a perspective view schematically illustrating a relationship between the multiple image 410 of the design P1 and the aerial image 400 of the design P2. The first optical structure 200 generates multiple reflection of the design P1 due to the effect of facing mirrors and produces the multiple virtual image 410 having a depth feeling equal to or greater than the thickness of a real object. The second optical structure 300 forms the aerial image 400 of the design P2 inside or around the multiple virtual image 410. By representing the multiple virtual image 410 around the aerial image 400, it is possible to achieve performance in which the aerial video floats at the center of the image having a sense of depth by the display device 100 having a small/thin stacked structure.

As described above, by optically arranging the design P1 of the first layer and the design P2 of the second layer in a thin aerial video element in which the two layers are combined so that the design P1 of the first layer and the design P2 of the second layer can be simultaneously viewed, the stereoscopic effect of the aerial image 400 is emphasized, the visual attraction is increased, and the probability of being recognized as the aerial display even at the first sight can be increased. Further, the aerial image 400 can be made more conspicuous by making the color of the light source 210 different from the color of the light source 310.

Note that the second optical structure for generating the aerial image is not limited to the configuration of Figs. 2A and 2B, and may have a configuration as illustrated in Fig. 4, for example. In a second optical structure 300A, the polarization beam splitter 350 is disposed on the upper portion of the light guide plate 320 instead of the half mirror 340, and the λ/4 plate 360 is disposed between the light guide layer 320 and the retroreflective layer 330.

The polarization beam splitter 350 is a polarization separation element capable of dividing incident light into a p-polarization component and an s-polarization component, and can transmit a light component linearly polarized in a certain specific direction. If the light L2 incident from the light source 310 is unpolarized light including various polarization components, a part of the light reflected by the light diffusion surface 326 is transmitted through the polarization beam splitter 350, and the other light is reflected by the polarization beam splitter 350. If the light L2 incident from the light source 310 is linearly polarized light, the direction of the linearly polarized light transmitted by the polarization beam splitter 350 is set to be different from the direction of the linearly polarized light of the incident light L2, and most of the light L2 is reflected by the polarization beam splitter 350.

The λ/4 plate 360 gives a phase difference π/2 (90 degrees) to the light incident from the light guide layer 320 and transmits the light. For example, when linearly polarized light is incident, it is converted into circularly polarized light (or elliptically polarized light), and when circularly polarized light (or elliptically polarized light) is incident, it is converted into linearly polarized light.

The retroreflective layer 330 reflects the light transmitted through the λ/4 plate 360 in the same direction as the incident light. When the light reflected by the retroreflective layer 330 is transmitted through the λ/4 plate 360 again, a phase difference π/2 is given. Thus, the light transmitted through the λ/4 plate 360 has a phase difference π from the light incident on the λ/4 plate 360. For example, if the light incident on the λ/4 plate 360 is linearly polarized light, the light becomes circularly polarized light (or elliptically polarized light) when it is transmitted through the λ/4 plate 360, when this circularly polarized light is retroreflected an odd number of times by the retroreflective layer 330, the circularly polarized light becomes circularly polarized light in the opposite direction, and when this circularly polarized light in the opposite direction is transmitted through the λ/4 plate 360, it becomes linearly polarized light in a direction 180 degrees different from the original linearly polarized light. In this manner, when the light transmitted through the λ/4 plate 360 is incident on the polarization beam splitter 350, most of the reflected light is transmitted through the polarization beam splitter 350, the transmitted light forms an image, and an aerial image is formed.

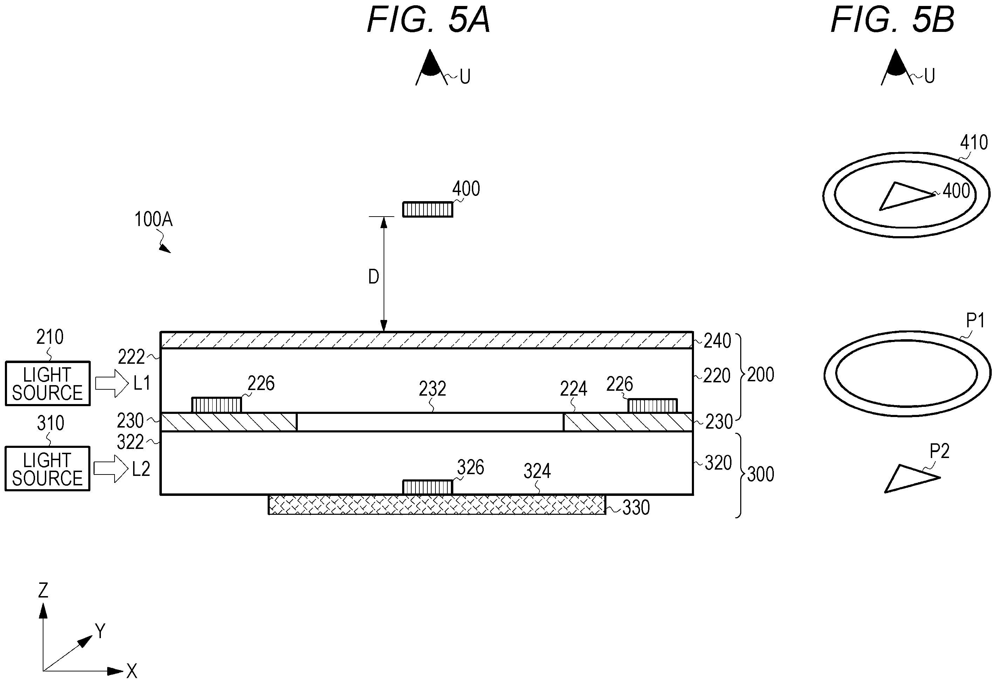

Next, a display device 100A according to a second embodiment of the present invention is illustrated in Figs. 5A and 5B. In the display device 100A of the present embodiment, the stacking direction is reversed from that of the first embodiment, and the first optical structure 200 is stacked above the second optical structure 300. The light diffusion surface 326 is formed on the bottom surface 324 of the light guide layer 320 of the second optical structure 300. The light diffusion surface 326 is processed to form the triangular design P2. The retroreflective layer 330 is disposed on the bottom surface of the light guide layer 320 so as to generate the aerial image 400 of the design P2.

On the other hand, the light diffusion surface 226 is formed on the outer peripheral portion of the bottom surface 224 of the light guide layer 220 of the first optical structure 200. The light diffusion surface 226 is processed to form the ring-shaped design P1. The design P1 is formed at a position not overlapping with the design P2. A ring-shaped reflection layer 230 is formed below the light diffusion surface 226. The opening 232 at the center of the reflection layer 230 has a size that exposes the light diffusion surface 326 and the retroreflective layer 330 so that the aerial image 400 is not shielded. That is, a part of the light diffused or scattered in the Z direction by the light diffusion surface 326 is reflected by the half mirror 240 of the first optical structure 200 via the opening 232, the reflected light is incident on the retroreflective layer 330, this incident light is reflected by the retroreflective layer 330 in the same direction, and a part of this reflected light is transmitted through the half mirror 240 to generate the aerial image 400.

In this manner, in the video viewed from the viewpoint U of the user, the multiple virtual image 410 of the design P1 generated by the first optical structure 200 is projected around the aerial image 400 of the design P2 generated by the second optical structure 300, the sense of depth is imparted to the aerial image 400, and recognition of the aerial image becomes easy. Further, in the present embodiment, by arranging the second optical structure 300 below the first optical structure 200, a distance D at which the aerial image 400 floats up can be made larger than that in the first embodiment, and an aerial image with a more stereoscopic effect can be displayed.

Next, a third embodiment of the present invention will be described. The third embodiment relates to a spatial input device in which the display device of the first or second embodiment is applied to a user input interface. As described with reference to Figs. 1A and 1B, the spatial input device includes a sensor that causes the display devices 100 and 100A of the present embodiment to display the aerial image 400 and detects an approach of an object (for example, a user's finger or the like) to the aerial image 400. The configuration of the sensor is not particularly limited, but for example, the sensor detects the approach of an object by a three-dimensional distance sensor, or detects the proximity of an object by analyzing image data captured by an imaging camera.

The spatial input device of the present embodiment can be applied to any user input, and can be applied to, for example, a computer device, an in-vehicle electronic device, an ATM of a bank or the like, a ticket purchasing machine of a station or the like, an input button of an elevator, and the like.

Although the preferred embodiments of the present invention have been described in detail above, the present invention is not limited to the specific embodiments, and various modifications and changes can be made within the scope of the invention set forth in the claims.

### Reference Signs List

- 100: Display device
- 200: First optical structure
- 210: Light source
- 220: Light guide layer
- 222: Side portion
- 224: Bottom portion
- 226: Light diffusion surface
- 230: Reflection layer
- 240: Half mirror
- 300: Second optical structure
- 310: Light source
- 320: Light guide layer
- 322: Side portion
- 324: Bottom portion
- 326: Light diffusion surface
- 330: Retroreflective layer
- 340: Half mirror

## Claims

1. A display device (100) capable of displaying an aerial image (400) using retroreflection, the display device (100) comprising:
a first optical structure (200) configured to form a multiple image (410) by light diffused or scattered by a first light diffusion surface (226) of a first light guide layer (220);
a second optical structure (300) configured to retroreflect light diffused or scattered by a second light diffusion surface (326) of a second light guide layer (320) to form an aerial image (400), **characterized in that**
the first optical structure (200) and the second optical structure (300) are in a stacked relationship, and the first light diffusion surface (226) and the second light diffusion surface (326) are disposed at positions not overlapping each other.

2. The display device (100) according to claim 1, wherein the first optical structure (200) includes reflection members formed on an upper surface side and a bottom surface side of the first light guide layer (220), and light incident from a side portion (222) of the first light guide layer (220) is diffused or scattered by the first light diffusion surface (226) formed on a bottom surface (224) or a bottom portion (224) of the first light guide layer (220).

3. The display device (100) according to claim 1 or 2, wherein the second optical structure (300) includes a retroreflective layer (330) formed on a bottom surface side of the second light guide layer (320), and light incident from a side portion (322) of the second light guide layer (320) is diffused or scattered by the second light diffusion surface (326) formed on a bottom surface (324) or a bottom portion (324) of the second light guide layer (320).

4. The display device (100) according to claim 3, wherein
the second optical structure (300) further includes a λ/4 plate between the second light guide layer (320) and the retroreflective layer (330), and
a beam splitter (350) formed on an upper surface of the second light guide layer (320) is a polarization beam splitter (350).

5. The display device (100) according to any one of claims 1 to 4, wherein
the second optical structure (300) is stacked on the first optical structure (200), the first optical structure (200) includes a reflection layer (230), a first light guide layer (220) formed on the reflection layer (230), and a beam splitter (350) formed on the first light guide layer (220), and the second optical structure (300) includes a retroreflective layer (330), a second light guide layer (320) formed on the retroreflective layer (330), and a beam splitter (350) formed on the second light guide layer (320), and
a multiple image (410) formed by the first light diffusion surface (226) of the first light guide layer (220) and an aerial image (400) formed by the second light diffusion surface (326) of the second light guide layer (320) can be simultaneously observed from above the second optical structure (300).

6. The display device (100) according to any one of claims 1 to 5, wherein
the first optical structure (200) is stacked on the second optical structure (300), the second optical structure (300) includes a retroreflective layer (330) and a second light guide layer (320) formed on the retroreflective layer (330), and the first optical structure (200) includes a reflection layer (230), a first light guide layer (220) formed on the reflection layer (230), and a beam splitter (350) formed on the first light guide layer (220), and
a multiple image (410) formed by the first light diffusion surface (226) of the first light guide layer (220) and an aerial image (400) formed by the second light diffusion surface (326) of the second light guide layer (320) can be simultaneously observed from above the first optical structure (200).

7. The display device (100) according to any one of claims 1 to 6, wherein a color of light incident on the first light guide layer (220) is different from a color of light incident on the second light guide layer (320).

8. The display device (100) according to any one of claims 1 to 7, further comprising a detection unit configured to detect an approach of an object to an aerial video (400) displayed by the display device (100).

## Patentansprüche

1. Anzeigevorrichtung (100), die in der Lage ist, ein Luftbild (400) unter Verwendung von Retroreflexion anzuzeigen, wobei die Anzeigevorrichtung (100) Folgendes aufweist:
eine erste optische Struktur (200), die dazu ausgebildet ist, durch von einer ersten Lichtdiffusionsfläche (226) einer ersten Lichtführungsschicht (220) diffundiertes oder gestreutes Licht ein Mehrfachbild (410) zu erzeugen;
eine zweite optische Struktur (300), die dazu ausgebildet ist, von einer zweiten Lichtdiffusionsfläche (326) einer zweiten Lichtführungsschicht (320) diffundiertes oder gestreutes Licht zu reflektieren, um ein Luftbild (400) zu erzeugen,
**dadurch gekennzeichnet,**
**dass** die erste optische Struktur (200) und die zweite optische Struktur (300) in einer gestapelten Beziehung angeordnet sind, und dass die erste Lichtdiffusionsfläche (226) und die zweite Lichtdiffusionsfläche (326) an Positionen angeordnet sind, die einander nicht überlappen.

2. Anzeigevorrichtung (100) nach Anspruch 1,
wobei die erste optische Struktur (200) Reflexionselemente aufweist, die auf einer oberen Oberflächenseite und einer unteren Oberflächenseite der ersten Lichtführungsschicht (220) gebildet sind, und wobei von einem Seitenbereich (222) der ersten Lichtführungsschicht (220) einfallendes Licht durch die erste Lichtdiffusionsfläche (226) diffundiert oder gestreut wird, die an einer unteren Oberfläche (224) oder einem Bodenbereich (224) der ersten Lichtführungsschicht (220) gebildet ist.

3. Anzeigevorrichtung (100) nach Anspruch 1 oder 2,
wobei die zweite optische Struktur (300) eine retroreflektierende Schicht (330) aufweist, die auf einer unteren Oberflächenseite der zweiten Lichtführungsschicht (320) gebildet ist, und wobei von einem Seitenbereich (322) der zweiten Lichtführungsschicht (320) einfallendes Licht durch die zweite Lichtdiffusionsfläche (326) diffundiert oder gestreut wird, die an einer unteren Oberfläche (324) oder einem Bodenbereich (324) der zweiten Lichtführungsschicht (320) gebildet ist.

4. Anzeigevorrichtung (100) nach Anspruch 3,
wobei die zweite optische Struktur (300) ferner eine λ/4-Platte zwischen der zweiten Lichtführungsschicht (320) und der retroreflektierenden Schicht (330) aufweist, und
wobei ein Strahlteiler (350), der an einer oberen Oberfläche der zweiten Lichtführungsschicht (320) gebildet ist, ein Polarisationsstrahlteiler (350) ist.

5. Anzeigevorrichtung (100) nach einem der Ansprüche 1 bis 4,
wobei die zweite optische Struktur (300) auf die erste optische Struktur (200) gestapelt ist, die erste optische Struktur (200) eine Reflexionsschicht (230), eine auf der Reflexionsschicht (230) gebildete erste Lichtführungsschicht (220) und einen auf der ersten Lichtführungsschicht (220) gebildeten Strahlteiler (350) aufweist, und die zweite optische Struktur (300) eine retroreflektierende Schicht (330), eine auf der retroreflektierenden Schicht (330) gebildete zweite Lichtführungsschicht (320) und einen auf der zweiten Lichtführungsschicht (320) gebildeten Strahlteiler (350) aufweist, und
wobei ein von der ersten Lichtdiffusionsfläche (226) der ersten Lichtführungsschicht (220) gebildetes Mehrfachbild (410) und ein von der zweiten Lichtdiffusionsfläche (326) der zweiten Lichtführungsschicht (320) gebildetes Luftbild (400) von oberhalb der zweiten optischen Struktur (300) gleichzeitig betrachtet werden können.

6. Anzeigevorrichtung (100) nach einem der Ansprüche 1 bis 5,
wobei die erste optische Struktur (200) auf die zweite optische Struktur (300) gestapelt ist, die zweite optische Struktur (300) eine retroreflektierende Schicht (330) und eine zweite Lichtführungsschicht (320) aufweist, die auf der retroreflektierenden Schicht (330) gebildet ist, und die erste optische Struktur (200) eine Reflexionsschicht (230), eine auf der Reflexionsschicht (220) gebildete erste Lichtführungsschicht (220) und einen auf der ersten Lichtführungsschicht (220) gebildeten Strahlteiler (350) aufweist, und
wobei ein von der ersten Lichtdiffusionsfläche (226) der ersten Lichtführungsschicht (220) gebildetes Mehrfachbild (410) und ein von der zweiten Lichtdiffusionsfläche (326) der zweiten Lichtführungsschicht (320) gebildetes Luftbild (400) von oberhalb der ersten optischen Struktur (200) gleichzeitig betrachtet werden können.

7. Anzeigevorrichtung (100) nach einem der Ansprüche 1 bis 6,
wobei sich eine Farbe des auf die erste Lichtführungsschicht (220) einfallenden Lichts von einer Farbe des auf die zweite Lichtführungsschicht (320) einfallenden Lichts unterscheidet.

8. Anzeigevorrichtung (100) nach einem der Ansprüche 1 bis 7,
die ferner eine Detektionseinheit aufweist, die dazu ausgebildet ist, eine Annäherung eines Objekts an eine von der Anzeigevorrichtung (100) angezeigte Luftbildaufnahme (400) zu detektieren.

## Revendications

1. Un dispositif d'affichage (100) permettant d'afficher une image aérienne (400) en utilisant la rétroréflexion, le dispositif d'affichage (100) comprenant:
une première structure optique (200) configurée pour former une image multiple (410) en utilisant la lumière diffusée ou dispersée par une première surface de diffusion de la lumière (226) d'une première couche de guidage de la lumière (220) ;
une seconde structure optique (300) configurée pour rétroréfléchir la lumière diffusée ou dispersée par une seconde surface de diffusion de la lumière (326) d'une seconde couche de guidage de la lumière (320) pour former une image aérienne (400), **caractérisée en ce que**
la première structure optique (200) et la seconde structure optique (300) sont empilées, et la première surface de diffusion de la lumière (226) et la seconde surface de diffusion de la lumière (326) sont disposées à des positions ne se chevauchant pas.

2. Le dispositif d'affichage (100) selon la revendication 1, dans lequel la première structure optique (200) comporte des éléments réfléchissants formés sur un côté de la surface supérieure et un côté de la surface inférieure de la première couche de guidage de la lumière (220), et la lumière incidente depuis une partie latérale (222) de la première couche de guidage de la lumière (220) est diffusée ou dispersée par la première surface de diffusion de la lumière (226) formée sur une surface inférieure (224) ou une partie inférieure (224) de la première couche de guidage de la lumière (220).

3. Le dispositif d'affichage (100) selon la revendication 1 ou 2, dans lequel la seconde structure optique (300) comporte une couche rétroréfléchissante (330) formée sur un côté de la surface inférieure de la seconde couche de guidage de la lumière (320), et la lumière incidente depuis une partie latérale (322) de la seconde couche de guidage de la lumière (320) est diffusée ou dispersée par la seconde surface de diffusion de la lumière (326) formée sur une surface inférieure (324) ou une partie inférieure (324) de la seconde couche de guidage de la lumière (320).

4. Le dispositif d'affichage (100) selon la revendication 3, dans lequel
la seconde structure optique (300) comporte en outre une plaque λ/4 disposée entre la seconde couche de guidage de la lumière (320) et la couche rétroréfléchissante (330), et
un séparateur de faisceau (350) formé sur une surface supérieure de la seconde couche de guidage de la lumière (320) est un séparateur de faisceau de polarisation (350).

5. Le dispositif d'affichage (100) selon l'une quelconque des revendications 1 à 4, dans lequel
la seconde structure optique (300) est empilée sur la première structure optique (200), la première structure optique (200) comporte une couche de réflexion (230), une première couche de guidage de la lumière (220) formée sur la couche de réflexion (230), et un séparateur de faisceau (350) formé sur la première couche de guidage de la lumière (220), et la seconde structure optique (300) comporte une couche rétroréfléchissante (330), une seconde couche de guidage de la lumière (320) formée sur la couche rétroréfléchissante (330), et un séparateur de faisceau (350) formé sur la seconde couche de guidage de la lumière (320), et
une image multiple (410) formée par la première surface de diffusion de la lumière (226) de la première couche de guidage de la lumière (220) et une image aérienne (400) formée par la seconde surface de diffusion de la lumière (326) de la seconde couche de guidage de la lumière (320) peuvent être observées simultanément depuis le dessus de la seconde structure optique (300).

6. Le dispositif d'affichage (100) selon l'une quelconque des revendications 1 à 5, dans lequel
la première structure optique (200) est empilée sur la seconde structure optique (300), la seconde structure optique (300) comporte une couche rétroréfléchissante (330) et une seconde couche de guidage de la lumière (320) formée sur la couche rétroréfléchissante (330), et la première structure optique (200) comporte une couche de réflexion (230), une première couche de guidage de la lumière (220) formée sur la couche de réflexion (230), et un séparateur de faisceau (350) formé sur la première couche de guidage de la lumière (220), et
une image multiple (410) formée par la première surface de diffusion de la lumière (226) de la première couche de guidage de la lumière (220) et une image aérienne (400) formée par la seconde surface de diffusion de la lumière (326) de la seconde couche de guidage de la lumière (320) peuvent être observées simultanément depuis le dessus de la première structure optique (200).

7. Le dispositif d'affichage (100) selon l'une quelconque des revendications 1 à 6, dans lequel la couleur de la lumière incidente sur la première couche de guidage de la lumière (220) est différente de la couleur de lumière incidente sur la seconde couche de guidage de la lumière (320).

8. Le dispositif d'affichage (100) selon l'une quelconque des revendications 1 à 7, comprenant en outre une unité de détection configurée pour détecter l'approche d'un objet par rapport à une vidéo aérienne (400) affichée par le dispositif d'affichage (100).
